# EUROPEAN PATENT SPECIFICATION

(11) **EP 3 252 390 B1**
(45) Date of publication and mention of the grant of the patent: **10.03.2021**
(21) Application number: 16187293.2
(22) Date of filing: 05.09.2016
(51) Int. Cl.: F24H 3/04, H02K 11/02, B29C 65/10

(54) **BRUSH HEAT GUN PROVIDED WITH CONTROL CIRCUIT**
BÜRSTENHEISSLUFTPISTOLE MIT STEUERUNGSSCHALTUNG
PISTOLET THERMIQUE A BALAIS COMPORTANT UN CIRCUIT DE COMMANDE

(30) Priority: 01.06.2016 CN 201620526139 U
(43) Date of publication of application: 06.12.2017
(73) Proprietor: Zhejiang Prulde Electric Appliance Co., Ltd., Jinhua City, Zhejiang 321035 (CN)
(72) Inventor: Han, Ting, Jinhua City, Zhejiang 321035 (CN); Yang, Weiming, Jinhua City, Zhejiang 321035 (CN)
(74) Representative: 2s-ip Schramm Schneider Bertagnoll Patent- und Rechtsanwälte Part mbB

(56) References cited:
- EP-A1- 0 235 735
- EP-A2- 0 300 209
- US-A- 5 023 925
- US-A1- 2010 277 014

## Description

### TECHNICAL FIELD

The invention relates to a heat gun, and particularly relates to a brush heat gun provided with a control circuit.

### BACKGROUND TECHNOLOGY

A heat gun is a tool which mainly utilizes hot air blown from a gun core made from heating resistance wires to weld and pick components. In accordance with the working principle of the heat gun, the main part of control circuit in the heat gun should comprise a temperature signal amplifying circuit, a comparison circuit, a silicon controlled circuit, a sensor, and an air control circuit, etc. In addition, in order to improve the overall performance of the circuit, some auxiliary circuits such as a temperature display circuit, a power off delay circuit, and a zero-crossing detection circuit are provided as well. The temperature display circuit is provided for facilitating temperature regulation. The temperature displayed by the temperature display circuit is the actual temperature of the circuit, so that the workers may regulate the temperature manually in accordance with the temperature displayed on the display screen during the operation process.

The EMC (electro magnetic compatibility) of the existing heat gun is too low to pass the safety standard test.

US 5,023,925 A relates to a brush heat gun according to the pre-characterizing part of claim 1.

### SUMMARY OF THE INVENTION

To solve the above problems, the invention provides a brush heat gun provided with a control circuit, which has better security performance.

To achieve the above objective, the following technical solution is used in the invention: a brush heat gun provided with a control circuit, comprising: a fan module provided with a brush motor and a heating module; and a main control unit controlling the rotation of the fan module and the heating of the heating module, characterized in that the brush heat gun further comprises a gear switch unit which is used to supply power to the brush heat gun, and an EMC processing circuit which used to enhance the electro magnetic compatibility of the brush heat gun is provided between the gear switch unit and an external power supply, the EMC processing circuit comprising a discharging circuit connected with the external power supply, a lightning protection circuit connected with the discharging circuit, a pre-capacitor connected with the lightning protection circuit, a common mode inductor connected with the pre-capacitor, and a post-capacitor with one end connected to the common mode inductor and with the other end connected to the gear switch unit.

The first preferred solution of the invention is: the brush heat gun further comprises a key module, which is connected with the main control unit and the gear switch unit for inputting user control information.

The second preferred solution of the invention is: the brush heat gun further comprises a detecting module, which is connected with the main control unit and the gear switch unit for acquiring the working condition of the brush heat gun.

The third preferred solution of the invention is: the detecting module comprises at least one thermocouple temperature sensor disposed at the air outlet of a heating cylinder.

The fourth preferred solution of the invention is: the brush heat gun further comprises a memory storage module, which is connected with the main control unit and the gear switch unit for storing the working conditions.

The fifth preferred solution of the invention is: the brush heat gun further comprises a display module connected with the main control unit and the gear switch unit for displaying the working conditions.

The sixth preferred solution of the invention is: the main control unit is connected with the heating module via a drive circuit.

The invention can achieve the following effects: a circuit with EMC processing capacity is provided so that the heat gun has better electro magnetic compatibility and higher security performance. The heat gun itself will not be significantly influenced even when the supply voltage changes.

The features and advantages of the invention will be disclosed in detail in the following specific embodiment and accompanying drawings.

### BRIEF DESCRIPTION OF THE DRAWINGS

The invention will be further described with reference to the accompanying drawings:
Fig. 1 shows a control circuit module diagram in accordance with embodiment 1 of the invention;
Fig. 2 shows an EMC processing circuit module diagram in accordance with embodiment 1 of the invention.

### DETAILED DESCRIPTION

The technical solution of the embodiment according to the invention will be explained and described hereinafter with reference to the accompanying drawings of the embodiment of the invention, but the following embodiment is merely a preferred embodiment of the invention, but not all embodiments,

### Embodiment 1

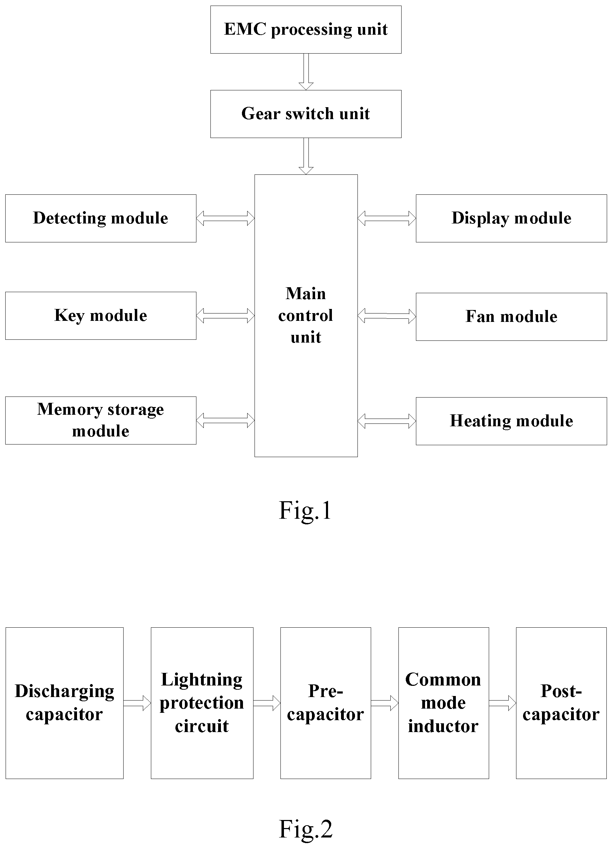

As shown in Fig. 1, a brush heat gun provided with a control circuit comprises a fan module provided with a brush motor and a heating module; and a main control unit controlling the rotation of the fan module and the heating of the heating module; and the brush heat gun further comprises a gear switch unit supplying power to the brush heat gun, and an EMC processing circuit which used to enhance the electro magnetic compatibility of the brush heat gun is provided between the gear switch unit and an external power supply. The brush heat gun further comprises a key module connected with the main control unit and the gear switch unit for inputting user control information. The brush heat gun further comprises a detecting module connected with the main control unit and the gear switch unit for acquiring the working conditions of the brush heat gun. The detecting module comprises at least one thermocouple temperature sensor provided at the air outlet of a heating cylinder. The brush heat gun further comprises a memory storage module connected with the main control unit and the gear switch unit for storing the working conditions. The brush heat gun further comprises a display module connected with the main control unit and the gear switch unit for displaying the working conditions.

As shown in Fig. 2, the EMC processing circuit comprises a discharging circuit connected with the external power supply, a lightning protection circuit connected with the discharging circuit, a pre-capacitor connected with the lightning protection circuit, a common mode inductor connected with the pre-capacitor, and a post-capacitor with one end connected with the common mode inductor and with the other end connected with the gear switch unit.

Based on the EMC processing circuit in Fig. 2, wherein the discharging circuit is directly connected with a plug providing external power supply, when the external supply voltage is excessive, the discharging circuit plays an effect of discharging , thereby preventing the control system of the heat gun being damaged by the large voltage. The lightning protection circuit is suitable for protecting the circuit in the case of excessive current.

During the working process, the EMC processing circuit is used for protecting the input of the external power supply. The external power supply is shunted via the gear switch unit, supplying power to various circuits within the heat gun, respectively. The main control unit comprises a MCU and an external circuit thereof, controlling the work of the fan module and the heating module in accordance with the power information stored in the gear switch unit and the memory storage module. The detecting module detects the working conditions of the heating module, and the working conditions comprise a heating condition, a cooling condition, a constant temperature condition, an overshoot condition, etc. In accordance with different conditions, the main control unit coordinates the heating module and the fan module. The display module comprises a display screen for displaying the heating condition, temperature information, etc.

The above working process is merely a simple description. A person skilled in the art can make a targeted process design in accordance with the specific environment, which will be omitted herein.

The flicker-prevention funtion is achieved with the following steps based on the above modules.

The thermocouple temperature sensor acquires a temperature signal. The MCU in the main control unit receives the above temperature signal. The MCU receives data 10 times around the first cycle, and averages the data after removing the maximum value and the minimum value. Then, the voltage of the thermocouple is computed after performing the operation of the standard signal 1.2V within the MCU. The first temperature is obtained by checking the standard reference table based on the voltage. In comparison with 700°C, if the obtained temperature is more than 700°C, the heating module is controlled to stop heating and the display module displays 888, while if the obtained temperature is less than 700°C, the display module displays the normal temperature.

The MCU performs PID operation by using the first temperature, the currently set temperature and the gradient of the gear temperature to work out the heating intensity pwm2_duty of the next cycle within the range of 0-200, wherein 0 refers to no heating, and 200 refers to heating with full power. The function of the proportion P in the PID operation to realize a rapid response process, that is, to carry out one control intensity once an error is detected, but the control intensity cannot be too large, otherwise, it will increase the overshoot. The function of I is to integral, aiming at eliminating the control error. For example, if the control requires 600°C, but the actually tested temperature is only 598°C, then the deviation of 2°C will accumulate all the time, and the accumulating speed depends on the value of I until the temperature reaches 600°C. The function of D is to control the overshoot. Since the system has hysteresis, the fast heating speed will inevitably result in the overshoot of the temperature. The appropriate increase of D parameter can suppress the overshoot. The selecting order of the three parameters is to tune PI first and tune D finally. And then, PI is finely tuned. MCU generates the heating intensity sequence according to the value of pwm2_duty.

Since the mains supply is a sine wave, with the frequency of 50HZ, there are 100 positive half-cycles and 100 negative half-cycles within 2S, therefore, 2S is taken as a heating cycle for ease of calculation, and the heating intensity pwm2_duty refers to the number of half-cycles to be heated in the 200 half-cycles accordingly. For example, when pwm2_duty is 100, it means that heating should last for 100 half-cycles and stop for 100 half-cycles within 2S time.

However, the distributing manner of the 100 half-cycles to be heated within 2S time will have different influences to EMC certification. It is found by actually testing different heating sequences that PST values of the following four heating sequences are relatively low. However, it is possible that the actual pwm2_duty value is any one from the range of 0-200, so the processing in sections is necessary to ensure the flicker test value PST in EMC to be defined around the value of 1 without exceeding 1.

MCU controls the drive circuits to drive the heating module to work according to the above heating intensity sequence and to heat in synchronization with zero-crossing signals. However, it should be ensured that the next 2S can be processed after the control of the previous 2S has ended. If it does not ensure that the cycle of 2S, there is possibility that the waveform is frequently adjusted within 2S, which will result in the increasing of the flicker PST value.

## Claims

1. A brush heat gun provided with a control circuit, comprising: a fan module provided with a brush motor and a heating module; and a main control unit for controlling the rotation of the fan module and the heating of the heating module, **characterized in that** the brush heat gun further comprises a gear switch unit for supplying power to the brush heat gun, wherein an EMC processing circuit which is used to enhance the electro magnetic compatibility of the brush heat gun is provided between the gear switch unit and an external power supply, the EMC processing circuit comprising a discharging circuit connected with the external power supply, a lightning protection circuit connected with the discharging circuit, a pre-capacitor connected with the lightning protection circuit, a common mode inductor connected with the pre-capacitor, and a post-capacitor, one end of which is connected with the common mode inductor and the other end of which is connected with the gear switch unit.

2. The brush heat gun according to claim 1 , **characterized in that**: the brush heat gun further comprises a key module connected with the main control unit and the gear switch unit for inputting user control information.

3. The brush heat gun according to one of the preceding claims, **characterized in that**: the brush heat gun further comprises a detecting module connected with the main control unit and the gear switch unit for acquiring the working condition of the brush heat gun.

4. The brush heat gun according to claim 3, **characterized in that**: the detecting module comprises at least one thermocouple temperature sensor provided at the air outlet of a heating cylinder.

5. The brush heat gun according to claim 3 or 4, **characterized in that**: the brush heat gun further comprises a memory storage module connected with the main control unit and the gear switch unit for storing the working condition.

6. The brush heat gun according to one of claims 3 to 5, **characterized in that**: the brush heat gun further comprises a display module connected with the main control unit and the gear switch unit for displaying the working condition.

7. The brush heat gun according to one of the preceding claims, **characterized in that**: the main control unit is connected with the heating module via a drive circuit.

## Patentansprüche

1. Bürstenbehaftete Heißluftpistole, die mit einer Steuerschaltung versehen ist, die Folgendes umfasst: ein Lüftermodul, das mit einem bürstenbehafteten Motor und einem Heizmodul versehen ist; und eine Hauptsteuereinheit zum Steuern der Drehung des Lüftermoduls und der Heizung des Heizmoduls, **dadurch gekennzeichnet, dass** die bürstenbehaftete Heißluftpistole ferner eine Gangschalteinheit zum Versorgen der bürstenbehafteten Heißluftpistole mit Strom umfasst, wobei eine EMV-Verarbeitungsschaltung, die verwendet wird, um die elektromagnetische Verträglichkeit der bürstenbehafteten Heißluftpistole zu verbessern, zwischen der Gangschalteinheit und einer externen Stromversorgung bereitgestellt ist, wobei die EMV-Verarbeitungsschaltung eine Entladeschaltung, die mit der externen Stromversorgung verbunden ist, eine Blitzschutzschaltung, die mit der Entladeschaltung verbunden ist, einen Vorkondensator, der mit der Blitzschutzschaltung verbunden ist, einen Gleichtaktinduktor, der mit dem Vorkondensator verbunden ist, und einen Nachkondensator, dessen eines Ende mit dem Gleichtaktinduktor verbunden ist und dessen anderes Ende mit der Gangschalteinheit verbunden ist, umfasst.

2. Bürstenbehaftete Heißluftpistole nach Anspruch 1, **dadurch gekennzeichnet, dass**: die bürstenbehaftete Heißluftpistole ferner ein Schlüsselmodul, das mit der Hauptsteuereinheit und der Gangschalteinheit zum Eingeben von Benutzersteuerinformationen verbunden ist, umfasst.

3. Bürstenbehaftete Heißluftpistole nach einem der vorhergehenden Ansprüche, **dadurch gekennzeichnet, dass**: die bürstenbehaftete Heißluftpistole ferner ein Erfassungsmodul, das mit der Hauptsteuereinheit und der Gangschalteinheit zum Erlangen des Betriebszustands der bürstenbehafteten Heißluftpistole verbunden ist, umfasst.

4. Bürstenbehaftete Heißluftpistole nach Anspruch 3, **dadurch gekennzeichnet, dass**: das Erfassungsmodul wenigstens einen Thermoelementtemperatursensor, der an dem Luftauslass eines Heizzylinders bereitgestellt ist, umfasst.

5. Bürstenbehaftete Heißluftpistole nach Anspruch 3 oder 4, **dadurch gekennzeichnet, dass**: die bürstenbehaftete Heißluftpistole ferner ein Speichermodul, das mit der Hauptsteuereinheit und der Gangschalteinheit zum Speichern des Betriebszustands verbunden ist, umfasst.

6. Bürstenbehaftete Heißluftpistole nach einem der Ansprüche 3 bis 5, **dadurch gekennzeichnet, dass**: die bürstenbehaftete Heißluftpistole ferner ein Anzeigemodul, das mit der Hauptsteuereinheit und der Gangschalteinheit zum Anzeigen des Betriebszustands verbunden ist, umfasst.

7. Bürstenbehaftete Heißluftpistole nach einem der vorhergehenden Ansprüche, **dadurch gekennzeichnet, dass**: die Hauptsteuereinheit über eine Treiberschaltung mit dem Heizmodul verbunden ist.

## Revendications

1. Pistolet thermique à balais pourvu d'un circuit de commande, comprenant : un module de ventilateur pourvu d'un moteur à balais et d'un module de chauffage ; et une unité de commande principale pour commander la rotation du module de ventilation et le chauffage du module de chauffage, **caractérisé en ce que** le pistolet thermique à balais comprend en outre une unité de commutation de vitesse pour alimenter le pistolet thermique à balais, dans lequel un circuit de traitement CEM qui est utilisé pour améliorer la compatibilité électromagnétique du pistolet thermique à balais est prévu entre l'unité de commutation de vitesse et une alimentation externe, le circuit de traitement CEM comprenant un circuit de décharge relié à l'alimentation externe, un circuit de protection contre la foudre relié au circuit de décharge, un pré-condensateur relié au circuit de protection contre la foudre, un inducteur de mode commun relié au pré-condensateur, et un post-condensateur, dont une extrémité est reliée à la bobine d'inductance de mode commun et dont l'autre extrémité est reliée à l'unité de commutation de vitesse.

2. Pistolet thermique à balais selon la revendication 1, **caractérisé en ce que** : le pistolet thermique à balais comprend en outre un module de clé relié à l'unité de commande principale et à l'unité de commutation de vitesse pour entrer des informations de commande d'utilisateur.

3. Pistolet thermique à balais selon l'une des revendications précédentes, **caractérisé en ce que** : le pistolet thermique à balais comprend en outre un module de détection relié à l'unité de commande principale et à l'unité de commutation de vitesse pour acquérir l'état de fonctionnement du pistolet thermique à balais.

4. Pistolet thermique à balais selon la revendication 3, **caractérisé en ce que** : le module de détection comprend au moins un capteur de température à thermocouple prévu à la sortie d'air d'un cylindre chauffant.

5. Pistolet thermique à balais selon la revendication 3 ou 4, **caractérisé en ce que** : le pistolet thermique à balais comprend en outre un module de stockage de mémoire relié à l'unité de commande principale et à l'unité de commutation de vitesse pour stocker l'état de fonctionnement.

6. Pistolet thermique à balais selon l'une des revendications 3 à 5, **caractérisé en ce que** : le pistolet thermique à balais comprend en outre un module d'affichage relié à l'unité de commande principale et à l'unité de commutation de vitesse pour afficher l'état de fonctionnement.

7. Pistolet thermique à balais selon l'une des revendications précédentes, **caractérisé en ce que** : l'unité de commande principale est reliée au module de chauffage par le biais d'un circuit d'entraînement.
